# EUROPÄISCHE PATENTSCHRIFT

(11) **EP 2 962 917 B1**
(45) Veröffentlichungstag und Bekanntmachung des Hinweises auf die Patenterteilung: **02.11.2016**
(21) Anmeldenummer: 15173690.7
(22) Anmeldetag: 24.06.2015
(51) Int. Cl.: B62D 5/093

(54) **HYDRAULISCHE LENKEINRICHTUNG**
HYDRAULIC STEERING
DIRECTION HYDRAULIQUE

(30) Priorität: 01.07.2014 DE 102014212717
(43) Veröffentlichungstag der Anmeldung: 06.01.2016
(73) Patentinhaber: Hydraulik Nord Fluidtechnik GmbH & Co. KG, 19370 Parchim (DE)
(72) Erfinder: Bergmann, Erhard, 19079 Banzkow / OT Mirow (DE); Voss, Gerhard, 19370 Parchim (DE); de la Motte, Markus, 19417 Klein Labenz (DE); Käckenmeister, Toralf, 19374 Raduhn (DE)
(74) Vertreter: Gulde & Partner

(56) Entgegenhaltungen:
- EP-A1- 2 113 445
- DE-A1- 19 935 021
- DE-B4-102008 023 034
- US-A1- 2007 221 437
- US-A1- 2009 114 469

## Beschreibung

Die Erfindung betrifft eine hydraulische Lenkeinrichtung.

Hier angesprochene Lenkeinrichtungen arbeiten vollhydraulisch und werden vorzugsweise zum Lenken von schweren und langsam fahrenden Fahrzeugen eingesetzt.

Lenkeinrichtungen dieser Art sind allgemein bekannt. Sie bestehen in der Hauptsache aus einem Gehäuse mit einem Zulaufanschluss für eine Versorgungspumpe, einem Ablaufanschluss für einen Tank und zwei Anschlüssen für den Zulauf zu einem Lenkzylinder und dem Rücklauf von dem Lenkzylinder. Im Gehäuse ist ein Lenk- oder Drehschiebersteuerventil untergebracht, das aus einer äußeren, im Gehäuse eingepassten Steuerhülse und einem inneren, konzentrisch zur Steuerhülse angeordneten Steuerkolben besteht, die beide gegen die Kraft einer Feder relativ und begrenzt zueinander drehbar sind. Zur Lenkeinrichtung gehört auch eine nach dem Orbitprinzip arbeitende Dosierpumpe, die am Gehäuse angeflanscht ist und die aus einem feststehenden Außenring mit beispielsweise sieben Innenzähnen und einem drehenden Läuferzahnrad mit dann sechs Außenzähnen besteht. Somit bilden sich in der Dosierpumpe sieben volumenveränderliche Kammern aus.

Das im Gehäuse untergebrachte Drehschiebersteuerventil ist einerseits durch den Steuerkolben mechanisch mit einem Lenkrad und andererseits durch die Steuerhülse über eine Antriebswelle mechanisch mit dem Läuferzahnrad der Dosierpumpe verbunden. Das Drehschiebersteuerventil steht außerdem mit den volumenveränderlichen Kammern der Dosierpumpe über Kommutatorkanäle in hydraulischer Verbindung. Dazu besitzen der Steuerkolben und die Steuerhülse radiale Bohrungen und radiale und axiale Kanäle die zusammen mehrere verstellbare und parallel wirkende Drosseln bilden.

Es ist allgemein bekannt, diese Lenkeinrichtung mit einer Reaktionsfunktion auszuführen, bei der beide Seiten des Lenkzylinders in der Neutralstellung über ein offenes Drehschiebersteuerventil mit der Dosierpumpe verbunden sind. Dadurch übertragen sich die auf die Räder einwirkenden und eine Richtungsänderung verursachenden Fahrwiderstände auf das Lenkrad. Die Reaktionsfunktion ist für den Fahrer sehr komfortabel.

Allgemein bekannt sind auch Lenkeinrichtungen mit einer Nichtreaktionsfunktion, bei der das Drehschiebersteuerventil in der Neutralstellung geschlossen und die beiden Zylinderräume des Lenkzylinders nicht miteinander verbunden sind. Diese Lenkeinrichtungen werden z. B. immer dann eingesetzt, wenn die Lenkung der Räder automatisch und ferngesteuert, beispielsweise durch eine GPS-Führung erfolgt.

Aus der DE 199 35 021 A1 ist eine hydraulische Lenkeinrichtung bekannt, die sowohl ein Reaktionsverhalten ermöglicht, das bei der Straßenfahrt angenehm für den Fahrer ist, als auch ein Nichtreaktionsverhalten, das beispielsweise bei einer GPS-gesteuerten Lenkbetätigung benötig wird. Dazu besitzt das Drehschiebersteuerventil für jede Drehrichtung zwei parallele Pfade, die den Lenkzylinder und die Dosierpumpe während der Lenkbewegung verbinden, wobei in der Neutralstellung einer der beiden Pfade offen und der andere der beiden Pfade geschlossen ausgeführt ist. An der Lenkbewegung im Reaktionsbetrieb sind beide Pfade beteiligt. In dem in der Neutralstellung offenen Pfad befindet sich jeweils ein Absperrventil, das von außen betätigbar ist und das diesen einen Pfad bei Bedarf absperrt. Somit ist für jede Drehrichtung ein Absperrventil vorgesehen, die beide jeweils in der geöffneten Stellung ein Reaktionsverhalten und in der gesperrten Stellung ein Nichtreaktionsverhalten gewährleisten.

Zur konstruktiven Verwirklichung dieser Bedingungen besitzt das Drehschiebersteuerventil für jede Drehrichtung zwei Reihen von Steuerbohrungen mit jeweils unterschiedlichen Querschnitten, wobei der Querschnitt der Steuerbohrungen im offenen und absperrbaren ersten Pfad größer als der Querschnitt der Steuerbohrungen im geschlossenen zweiten Pfad ist.

Diese Ausführung hat erhebliche Nachteile. So ist die Gestaltung der Öffnungscharakteristiken der beiden Pfade sowohl für den Zylinderzulauf als auch für den Zylinderablauf sehr schwierig.

Für den Modus "Reaktion" stehen beide Pfade für den Zu- und Ablauf zur Verfügung, wobei die Pfade naturgemäß eine unterschiedliche Öffnungscharakteristik aufweisen und jeder Pfad für sich die Lenkungsfunktion im Betriebszustand erfüllt.

In dem Modus "Nichtreaktion" wird sowohl im Zu- als auch im Ablauf jeweils ein Pfad abgesperrt. Dieser Pfad ist im Zulauf derjenige, der die Reaktion ermöglicht und demzufolge die größere Querschnittszunahme beim Auslenken aufweist. Im Ablauf wird ebenfalls ein Pfad abgesperrt, so dass wesentlich weniger Querschnitt zur Verfügung steht.

Es ergibt sich also in den beiden Modi ein höchst unterschiedliches Angebot an Querschnitten für den Zu- und Ablauf, was zu unterschiedlichen Druckverlusten für den Ölstrom zum und vom Lenkzylinder führt und damit das Verhalten der Lenkung wesentlich beeinflusst. Der Fahrer muss sich darauf immer wieder neu einstellen, was besonders schwierig ist, wenn die Umschaltung automatisch geschwindigkeitsabhängig erfolgt.

DE 10 2008 023 034 B4 offenbart eine hydraulische Lenkeinrichtung nach dem Oberbegriff des Anspruches 1, bei der zur Angleichung des Lenkungsverhaltens zwischen der Reaktionsfunktion und der Nichtreaktionsfunktion und zur Vereinfachung des Aufbaus der Lenkeinrichtung vorgeschlagen wird, dass der in der Neutralstellung geschlossene erste Pfad zwischen der Dosierpumpe und dem Lenkzylinder als Hauptpfad für den Lenkungsbetrieb und der absperrbare zweite Pfad zwischen der Dosierpumpe und dem Lenkzylinder als Hilfspfad für den Reaktionsbetrieb in der Neutralstellung ausgelegt sind. Bei dieser Lenkeinrichtung entsteht im Nichtreaktionsbetrieb eine hohe Druckdifferenz am Rotorsatz, was zu Leckagen und einer Verstellung führen kann und aufwändige Dichtungen erfordert.

Es ist daher die Aufgabe der Erfindung, die Lenkeinrichtung für den Nichtreaktionsbetrieb beziehungsweise die Reaktionsfunktion zu verbessern.

Diese Aufgabe wird durch eine hydraulische Lenkeinrichtung mit den in Anspruch 1 genannten Merkmalen gelöst. Zweckmäßige Ausgestaltungsformen ergeben sich aus den Unteransprüchen.

Die Erfindung schlägt vor, dass das Lenkventil zwischen der Dosierpumpe und dem Lenkzylinder zwei parallele Pfade besitzt, wobei ein erster der beiden Pfade in der Neutralstellung gesperrt ist und in dem Nichtreaktionsbetrieb ein zweiter der beiden Pfade in der Neutralstellung überbrückt oder kurzgeschlossen ist. Dadurch wird erfolgreich eine Druckdifferenz verhindert, so dass keine Leckagen oder Beeinträchtigungen am Rotorsatz auftreten. Der zweite Pfad kann aus zwei Teilpfaden bestehen, die sich jeweils zwischen dem Lenkventil und Anschlüssen R und L eines steuerbaren Absperrventils oder Wegeventils erstrecken. Die Erfindung bezieht sich auf den Nichtreaktionsbetrieb.

Das Lenkventil wird auch als Orbitrol bezeichnet und kann ein Drehschiebersteuerventil aufweisen oder aus einem Drehschiebersteuerventil bestehen.

Vorzugsweise ist vorgesehen, dass der zweite Pfad in dem Lenkventil überbrückt ist. Diese Position ist zur Überbrückung gut geeignet, da so in unmittelbarer Nähe des Rotorsatzes ein Druckausgleich geschaffen wird.

Zur Überbrückung können in der Steuerhülse des Lenkventils Verbindungsbohrungen vorgesehen sein. Mittels dieser Verbindungsbohrungen, von denen vorzugsweise zwei vorgesehen sind, kann die Überbrückung oder der Kurzschluss auf einfache Art und Weise realisiert werden.

Alternativ ist vorgesehen, dass der zweite Pfad in einem Absperrventil oder Wegeventil überbrückt ist. So kann das Wegeventil direkt den Kurzschluss oder eine Verbindung des zweiten Pfades an die Anschlüsse R und L der Lenkeinrichtung schalten, während das Lenkventil nicht verändert wird.

Die Erfindung wird nachfolgend anhand eines Ausführungsbeispiels und dazugehöriger Zeichnungen näher erläutert. Die Figuren zeigen:
- Fig. 1: ein vereinfachtes Funktionsschaltbild eines ersten Ausführungsbeispiels einer hydraulischen Lenkeinrichtung,
- Fig. 2: ein vereinfachtes Funktionsschaltbild eines zweiten Ausführungsbeispiels einer hydraulischen Lenkeinrichtung, und
- Fig. 3: ein abgewickeltes Lenkventil des zweiten Ausführungsbeispiels der hydraulischen Lenkeinrichtung in der Nichtreaktionsausführung.

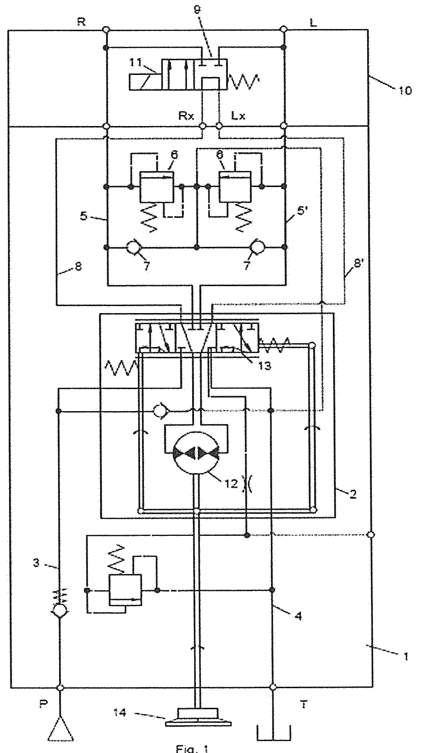

Gemäß der Fig. 1 besitzt die hydraulische Lenkeinrichtung 1 einen Zulaufanschluss P für den Versorgungsölstrom, zwei Verbraucheranschlüsse R und L für die beiden Kammern eines nicht gezeigten Lenkzylinders und einen Rücklaufanschluss T zu einem Tank.

Die Verbindungen zwischen den genannten Anschlüssen P, T, L, R und einer Dosierpumpe 12 erfolgt über ein Lenkventil 2, das hier in einer closed-center-Ausführung zwischen dem Zulaufanschluss P und dem Rücklaufanschluss T dargestellt ist. Zwischen dem Zulaufanschluss P und dem Lenkventil 2 ist eine Zulaufleitung 3 und zwischen dem Lenkventil 2 und dem Rücklaufanschluss T ist eine Rücklaufleitung 4 vorgesehen. Weiterhin besitzt die Lenkeinrichtung 1 zwischen dem Lenkventil 2 und den beiden Zylinderanschlüssen R, L jeweils einen Hauptpfad oder ersten Pfad 5, 5' für den Lenkbetrieb, der in Abhängigkeit von der Lenkrichtung eine Zulaufleitung oder eine Rücklaufleitung ist. In üblicher Weise befinden sich zwischen den beiden Hauptpfaden 5, 5' zwei Schockventile 6 und zwei Nachsaugventile 7. Die Erfindung ist aber auch bei Lenkungen in open-center-Ausführung anwendbar.

Zu jedem ersten Pfad 5, 5' ist parallel ein zweiter Pfad 8, 8' angeordnet. Der zweite Pfad 8, 8' besteht aus zwei Teilpfaden 8 und 8', die sich jeweils zwischen dem Lenkventil 2 und Anschlüssen Rx und Lx der Lenkeinrichtung 1 erstrecken. Der zweite Pfad 8, 8' verläuft dort weiter zu einem Wege- oder Absperrventil 9, ausgeführt als 4/2 Wegeventil mit kurzgeschlossener Mittelsstellung, das in einem Gehäuse 10 angeordnet ist. Das Absperrventil 9 kann in beliebiger Weise durch ein Betätigungselement 11 geschaltet werden.

In einer zweckmäßigen Ausführung ist das Gehäuse 10 an die Lenkeinrichtung 1 angeflanscht. Durch dieses Gehäuse 10 werden die ersten Teilpfade 5 und 5', also der erste Pfad, zu den Anschlüssen R und L hindurchgeführt. Die zweiten Teilpfade 8 und 8', also der zweite Pfad, münden ebenfalls in das Gehäuse 10 zu dem darin befindlichen Absperrventil 9 und werden von diesem wahlweise mit den ersten Teilpfaden 5 und 5' verbunden oder miteinander verbunden. In dem verbundenen Zustand der zweiten Teilpfade 8 und 8' ist der zweite Pfad 8, 8' überbrückt oder kurzgeschlossen, so das zwischen den Anschlüssen Rx und Lx beziehungsweise am Rotorsatz des Lenkventils 2 keine Druckdifferenz anliegt.

Das Gehäuse 10 mit dem Wege- oder Absperrventil 9 kann Bestandteil, auch in einem gemeinsamen Gehäuse, der Lenkeinrichtung 1 sein. Ebenso kann das Gehäuse 10 auch getrennt von der Lenkeinrichtung 1 angeordnet werden.

Das Lenkventil 2 umfasst eine Dosierpumpe 12 und ein Verteilerventil 13. Das Verteilerventil 13 ist hier als Drehschiebersteuerventil ausgeführt. Diese Kombination wird als sogenannte Orbitrol-Lenkeinheit oder -ventil bezeichnet. Das Verteilerventil 13 und die Dosierpumpe 12 lassen sich beide von einem Handrad oder Lenkrad 14 in Drehung versetzen.

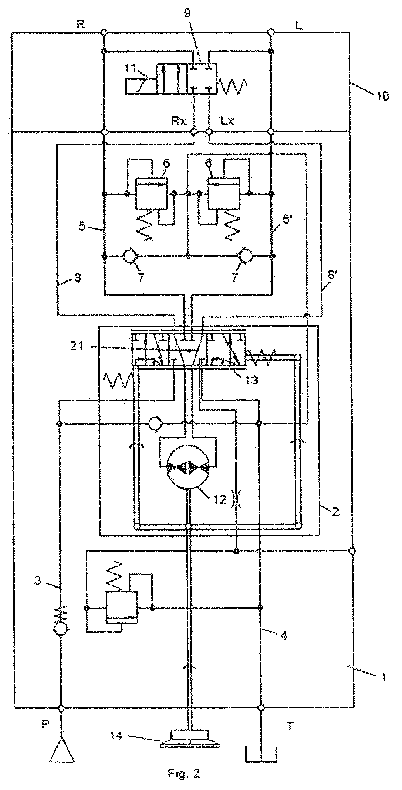

In Figur 2 ist ein zweites Ausführungsbeispiel der Lenkeinrichtung 1 gezeigt, die im Wesentlichen der Lenkeinrichtung 1 aus Figur 1 entspricht. Die beiden Ausführungsbeispiele unterscheiden sich durch das Absperrventil 9, das als 4/2 Wegeventil mit gesperrter Mittelstellung ausgeführt ist, und durch das Verteilerventil 13 voneinander.

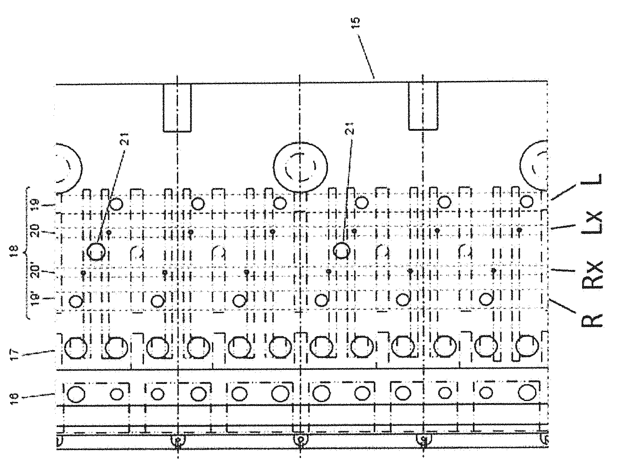

Gemäß Figur 2 erfolgt die Überbrückung zwischen den Anschlüssen Rx und Lx in dem Verteilerventil 13 und nicht in dem Absperrventil 9, wie in Figur 1. In Figur 2 schließt das Absperrventil 9 in der abgebildeten Stellung den zweiten Pfad 8, 8' nicht kurz, sondern sperrt ihn. Die Überbrückung oder der Kurzschluss ist in dem Verteilerventil 13 realisiert, wie in Figur 3 dargestellt ist.

Figur 3 stellt eine äußere Steuerhülse 15 und einen unsichtbar dargestellten inneren Steuerkolben dar. Aus den axialen Steuernuten des Steuerkolbens und den verschiedenen Reihen von Bohrungen in der Steuerhülse 15 ergeben sich verschiedene Ebenen von verstellbaren Steueröffnungen. So bilden sich zunächst ein Zulaufkanal 16, eine Ebene von Steueröffnungen 17 für die Verbindung zur und von der Dosierpumpe 12 und die Ebenen der Steueröffnungen 18 für den oder die ersten Pfade 5, 5' und den oder die zweiten Pfade 8, 8'.

Zu diesen Steueröffnungen 18 gehören die Ebene der Steueröffnungen 19, 19' für den ersten Pfad 5, 5' und die Ebene der Steueröffnungen 20, 20' für den zweiten Pfad 8, 8'. Dabei führen in einer ausgewählten Lenkrichtung 1 die Steueröffnungen 19 und 20 zum Lenkzylinder hin und die Steueröffnungen 19' und 20' vom Lenkzylinder zurück. Die Ebene oder Durchführung 19 ist dem Anschluss L verbunden und die Ebene oder Durchführung 19' ist dem Anschluss R verbunden. Die Ebene oder Durchführung 20 ist dem Anschluss Lx verbunden und die Ebene oder Durchführung 20' ist dem Anschluss Rx verbunden.

Die Steueröffnungen 20 und 20' des zweiten Pfades 8, 8' sind von den Steuerbohrungen 19, 19' abschaltbar ausgeführt. Dazu ist das steuerbare Absperrventil 9 vorgesehen, dessen Gehäuse 10 an einem Gehäuse der Lenkeinrichtung 1 angeflanscht ist. Dieses Absperrventil 9 ist einerseits durch eine Feder belastet und andererseits von einem Betätigungselement 11 beaufschlagbar. Das Betätigungselement 11 gehört beispielsweise zu einer elektrischen Stelleinheit. Das Gehäuse 10 besitzt vier Kanäle, die mit jeweils einer der Ebenen von ersten und zweiten Pfaden 19, 20, 19' und 20' verbunden sind.

In der äußeren Steuerhülse 15 ist mindestens eine Verbindungsbohrung 21 ausgeführt, welche die beiden Ebenen 20 und 20' beziehungsweise die Anschlüsse Lx und Rx im Nichtreaktionsbetrieb miteinander verbindet.

In der betätigten Stellung des Absperrventils 9 wird die Verbindung 19 mit 20 und 19' mit 20' unterbrochen. Damit ist der Modus "Nichtreaktion" eingestellt. Der Ölstrom fließt beim Lenken ausschließlich über die Steueröffnungen 19 und 19' des ersten Pfads 5, 5'. Der zweite Pfad 8, 8' hingegen ist mittels der Verbindungsbohrungen überbrückt, so dass zwischen den Anschlüssen Rx und Lx kein hoher Druck entstehen kann.

Im Folgenden wird kurz die Funktion der hydraulischen Lenkeinrichtung beschrieben.

Bei einer nicht betätigten Lenkeinrichtung befindet sich das Lenkventil 2 in der Neutralstellung, wo sich der innere Steuerkolben und die äußere Steuerhülse 15 zentrieren und alle wesentlichen, zur Dosierpumpe 12 und zum Lenkzylinder führenden Verbindungen geschlossen sind. Die nicht betätigte Stellung des steuerbaren Absperrventils 9 hält über die Verknüpfung der ersten Pfade 5, 5' mit den zweiten Pfaden 8, 8' eine Verbindung zwischen der Dosierpumpe 12 und dem Lenkzylinder offen, die in der Neutralstellung die Funktion einer Reaktion gewährleistet.

Bei einer Auslenkung des Lenkventils 2 beispielsweise nach rechts werden der Steuerkolben und die Steuerhülse 15 entgegen der Kraft eines Federelementes aus ihrer Mittelstellung in eine Arbeitsstellung verdreht, wodurch sich entsprechende Steuerkanäle öffnen. Dadurch gelangt der Ölstrom über das Verteilerventil 13 zur Dosierpumpe 12, wo er bedarfsgerecht bemessen und dann wieder über das Verteilerventil 13 zum Lenkzylinder geführt wird. Auf diesem Wege passiert das Öl zunächst den Zulaufkanal 16 zum Verteilerventil 13 und von dort die Steueröffnungen 17 für den Zulauf zur und den Rücklauf von der Dosierpumpe 12. Das Öl gelangt dann über die Steueröffnungen 19, 20 zum Lenkzylinder und bewirkt, dass sich die Räder verstellen. Dabei strömt das aus dem Lenkzylinder verdrängte Öl über die Steueröffnungen 19' und dann über die Rücklaufleitung 4 zum Tank.

In der für den Reaktionsbetrieb maßgeblichen nicht betätigten Stellung des steuerbaren Absperrventils 9 sind die ersten Pfade 5, 5' und zweiten Pfade 8, 8' miteinander verbunden, sodass beide Ebenen an der Lenkbetätigung beteiligt sind.

Dagegen sind in der für den Nichtreaktionsbetrieb maßgeblichen Stellung des steuerbaren Absperrventils 9 die ersten Pfade 5, 5' und die zweiten Pfade 8, 8' getrennt, sodass nur die ersten Pfade 5, 5' an der Lenkbewegung beteiligt sind. Die zweiten Pfade 8, 8' sind überbrückt.

### Liste der Bezugszeichen

- 1: Lenkeinrichtung
- 2: Lenkventil
- 3: Zulaufleitung
- 4: Rücklaufleitung
- 5, 5': Hauptpfad für den Lenkbetrieb
- 6.: Schockventil
- 7.: Nachsaugventil
- 8, 8': Hilfspfad für den Reaktionsbetrieb
- 9: steuerbares Absperrventil
- 10: Gehäuse für Absperrventil
- 11: Betätigungselement
- 12: Dosierpumpe
- 13: Verteilerventil
- 14: Lenkrad
- 15: Steuerhülse
- 16: Zulaufkanal
- 17: Steueröffnungen für die Dosierpumpe
- 18: Steueröffnungen für Haupt- und Hilfspfad
- 19, 19': Steueröffnungen für Hauptpfad
- 20, 20': Steueröffnungen für Hilfspfad
- 21: Verbindungsbohrung

## Patentansprüche

1. Hydraulische Lenkeinrichtung, bestehend aus einem Lenkventil (2) und einer Dosierpumpe (12), wobei
- das Lenkventil (2) eine äußere Steuerhülse (15) und einen inneren Steuerkolben aufweist, die konzentrisch zueinander angeordnet sind, in einem begrenzten Winkel zueinander verdrehbar sind und miteinander und mit der Dosierpumpe (12) korrespondierende Bohrungen und Kanäle zur Versorgung eines Lenkzylinders besitzen und
- das Lenkventil (2) zwischen der Dosierpumpe (12) und dem Lenkzylinder zwei parallele Pfade (5, 8; 5', 8') besitzt, wobei ein erster der beiden Pfade (5, 5') in der Neutralstellung gesperrt ist,
**dadurch gekennzeichnet, dass** in einem Nichtreaktionsbetrieb ein zweiter der beiden Pfade (8, 8') in der Neutralstellung überbrückt ist.

2. Hydraulische Lenkeinrichtung nach Anspruch 1, **dadurch gekennzeichnet, dass** der zweite Pfad (8, 8') in dem Lenkventil (2) überbrückt ist.

3. Hydraulische Lenkeinrichtung nach Anspruch 2, **dadurch gekennzeichnet, dass** in der Steuerhülse (15) mindestens eine Verbindungsbohrung (21) zur Überbrückung vorgesehen ist.

4. Hydraulische Lenkeinrichtung nach Anspruch 1, **dadurch gekennzeichnet, dass** der zweite Pfad (8, 8') in einem Absperrventil (9) überbrückt ist.

5. Hydraulische Lenkeinrichtung nach einem der Ansprüche 1 bis 4, **dadurch gekennzeichnet, dass** die Steueröffnungen (20, 20') für den zweiten Pfad (8, 8') einen kleineren Querschnitt aufweisen als Steueröffnungen (19, 19') für den ersten Pfad (5, 5').

6. Hydraulische Lenkeinrichtung nach Anspruch 5, **dadurch gekennzeichnet, dass** der Querschnitt der in der Neutralstellung geschlossenen Steueröffnungen (19, 19') für den ersten Pfad (5, 5') so groß gewählt wird, dass er allein für den Lenkbetrieb ausreichend ist.

7. Hydraulische Lenkeinrichtung nach einem der Ansprüche 1 bis 6, **dadurch gekennzeichnet, dass** ein steuerbares Absperrventil (9) zur Absperrung der Steueröffnungen (20, 20') für den zweiten Pfad (8, 8') so ausgelegt ist, dass die Steueröffnungen (20) für die eine Lenkrichtung und die Steueröffnungen (20') für die andere Lenkrichtung gleichzeitig und durch ein gemeinsames Steuersignal zu- und abgesperrt werden.

8. Hydraulische Lenkeinrichtung nach Anspruch 7, **dadurch gekennzeichnet, dass** das steuerbare Absperrventil (9) sich in einem Gehäuse (10) befindet, dass direkt an die Lenkeinrichtung (1) angeflanscht ist und nicht mehr Anschlüsse nach außen führen, als bei einer vergleichbaren Lenkeinrichtung ohne angeflanschtes Absperrventil (9).

9. Hydraulische Lenkeinrichtung nach Anspruch 8, **dadurch gekennzeichnet, dass** der erste Pfad (5, 5') ständig mit den Anschlüssen R und L des steuerbaren Absperrventils (9) verbunden ist.

## Claims

1. A hydraulic steering device, consisting of a steering valve (2) and a metering pump (12), wherein
- the steering valve (2) comprises an outer control sleeve (15) and an inner control piston, which are arranged concentrically to one another, which can be twisted at a limited angle to one another, and which have bores and channels corresponding to one another and to the metering pump (12) for supplying a steering cylinder, and
- the steering valve (2) has two parallel paths (5, 8; 5', 8') between the metering pump (12) and the steering cylinder, wherein a first of the two paths (5, 5') is blocked in the neutral position,
**characterized in that** a second of the two paths (8, 8') is bridged in the neutral position in a non-reaction operation.

2. The hydraulic steering device according to Claim 1, **characterized in that** the second path (8, 8') is bridged in the steering valve (2).

3. The hydraulic steering device according to Claim 2, **characterized in that** at least one connecting bore (21) for bridging is provided in the control sleeve (15).

4. The hydraulic steering device according to Claim 1, **characterized in that** the second path (8, 8') is bridged in a shut-off valve (9).

5. The hydraulic steering device according to any one of Claims 1 to 4, **characterized in that** the control openings (20, 20') for the second path (8, 8') have a smaller cross-section than control openings (19, 19') for the first path (5, 5').

6. The hydraulic steering device according to Claim 5, **characterized in that** the cross-section of the control openings (19, 19') for the first path (5, 5'), which are closed in the neutral position, is selected to be so large that said cross-section is solely sufficient for the steering operation.

7. The hydraulic steering device according to any one of Claims 1 to 6, **characterized in that** a controllable shut-off valve (9) is designed to shut off the control openings (20, 20') for the second path (8, 8') such that the control openings (20) for the one steering direction and the control openings (20') for the other steering direction are simultaneously closed and shut off by a joint control signal.

8. The hydraulic steering device according to Claim 7, **characterized in that** the controllable shut-off valve (9) is located in a housing (10) which is directly flanged to the steering device (1), and no more ports lead to the outside than in the case of a comparable steering device without a shut-off valve (9) flanged thereto.

9. The hydraulic steering device according to Claim 8, **characterized in that** the first path (5, 5') is constantly connected to the ports R and L of the controllable shut-off valve (9).

## Revendications

1. Direction hydraulique, se composant d'une soupape de direction (2) et d'une pompe de dosage (12),
- la soupape de direction (2) présentant un manchon de commande extérieur (15) et un piston de commande intérieur, lesquels sont disposés de façon concentrique l'un par rapport à l'autre, peuvent être pivotés sur un angle limité l'un par rapport à l'autre et possèdent des alésages et des canaux correspondants l'un entre l'autre et avec la pompe de dosage (12) pour l'alimentation d'un cylindre de direction, et
- la soupape de direction (2) possédant deux chemins parallèles (5, 8, 5', 8') entre la pompe de dosage (12) et le cylindre de direction, un premier des deux chemins (5, 5') étant bloqué en position neutre,
**caractérisé en ce que**, en un fonctionnement de non réaction, un deuxième des deux chemins (8, 8') est ponté dans la position neutre.

2. Direction hydraulique selon la revendication 1, **caractérisée en ce que** le deuxième chemin (8, 8') est ponté dans la soupape de direction (2).

3. Direction hydraulique selon la revendication 2, **caractérisée en ce que**, dans le manchon de commande (15), au moins un alésage de liaison (21) est prévu pour le pontage.

4. Direction hydraulique selon la revendication 1, **caractérisée en ce que** le deuxième chemin (8, 8') est ponté dans une soupape d'arrêt (9).

5. Direction hydraulique selon l'une des revendications 1 à 4, **caractérisée en ce que** les ouvertures de commande (20, 20') pour le deuxième chemin (8, 8') présentent une section inférieure aux ouvertures de commande (19, 19') pour le premier chemin (5, 5').

6. Direction hydraulique selon la revendication 5, **caractérisée en ce que**, pour le premier chemin (5, 5'), la section des ouvertures de commande (19, 19') fermées dans la position neutre est choisie d'une taille telle que ladite section suffit à elle seule pour l'opération de direction.

7. Direction hydraulique selon l'une des revendications 1 à 6, **caractérisée en ce qu'**une soupape d'arrêt commandable (9) pour la fermeture des ouvertures de commande (20, 20') pour le deuxième chemin (8, 8') est conçue de telle sorte que les ouvertures de commande (20) pour un sens de direction et les ouvertures de commande (20') pour l'autre sens de direction peuvent être fermées et arrêtées simultanément et par un signal de commande commun.

8. Direction hydraulique selon la revendication 7, **caractérisée en ce que** la soupape d'arrêt (9) se trouve dans un boîtier (10), lequel est fixé directement sur la direction (1) et **en ce que** les raccordements conduisant à l'extérieur ne sont pas plus nombreux que sur une direction comparable sans soupape d'arrêt fixée (9).

9. Direction hydraulique selon la revendication 8, **caractérisée en ce que** le premier chemin (5, 5') est toujours relié avec les raccordements R et L de la soupape d'arrêt (9) commandable.
